# FASCICULE DE BREVET EUROPEEN

(11) **EP 3 496 972 B1**
(45) Date de publication et mention de la délivrance du brevet: **07.10.2020**
(21) Numéro de dépôt: 17758223.6
(22) Date de dépôt: 25.07.2017
(51) Int. Cl.: B60N 3/00, B60R 7/04

(54) **CONSOLE CONVERTIBLE EN TABLE POUR VEHICULE AUTOMOBILE A SECURITE OPTIMISEE**
IN EINE TISCH VERWANDELBARE KONSOLE FÜR EIN KRAFTFAHREUG MIT OPTIMIERTER SICHERHEIT
CONSOLE CONVERTIBLE INTO A TABLE FOR AUTOMOBILE VEHICLE WITH OPTIMISED SAFETY

(30) Priorité: 11.08.2016 FR 1657719
(43) Date de publication de la demande: 19.06.2019
(73) Titulaire: PSA Automobiles SA, 78300 Poissy (FR)
(72) Inventeur: BALLANDRAS, Philippe, 25700 VALENTIGNEY (FR); DALVERNY, Nicolas, 25630 SAINTE SUZANNE (FR); LOUBATIE, Pascal, 94800 VILLEJUIF (FR)
(86) Numéro de dépôt international: PCT/FR2017/052053
(87) Numéro de publication internationale: WO 2018/029411

(56) Documents cités:
- FR-A1- 3 007 341
- US-A1- 2008 315 606

## Description

### Domaine de l'invention

La présente invention concerne l'agencement de l'habitacle des véhicules automobiles de type monospace ou utilitaires, qui comportent plusieurs rangées de sièges latéraux agencés symétriquement de part et d'autre de l'axe longitudinal médian du véhicule.

L'invention vise en particulier une console convertible en table destinée à être montée coulissante sur le plancher d'un tel véhicule le long de son axe longitudinal médian.

### Arrière-plan de l'invention

Les véhicules de type monospace à habitacle modulable et les véhicules utilitaires de type fourgon dédiés au transport de passagers sont de plus en plus employés dans un cadre « loisirs », notamment en période de vacances.

Ce type de service a conduit les constructeurs automobiles à intégrer une table dans l'habitacle de ces véhicules afin d'améliorer le confort des passagers.

Pour préserver l'espace disponible à l'intérieur de l'habitacle du véhicule lorsque la table n'est pas utilisée, cette dernière est généralement escamotable.

Il est ainsi connu, notamment de la demande de brevet française FR 2 850 332, de prévoir une console montée coulissante sur le plancher le long de l'axe longitudinal médian du véhicule et comportant un caisson définissant au moins un logement latéral vertical accessible par une fente d'entrée, ainsi qu'au moins un plateau monté mobile sur ledit caisson entre une configuration rangée dans laquelle ledit plateau est logé dans un dit logement correspondant et une configuration déployée dans laquelle ledit plateau s'étend à l'horizontale de sorte à former une table.

Le caisson de la console qui constitue le pied de la table doit donc être suffisamment haut pour que l'usage de la table soit ergonomique pour l'utilisateur, ce qui se traduit par une masse importante de la console.

Afin de palier à cet inconvénient, la demande de brevet FR 3 007 341 déposée par la demanderesse divulgue une telle console comportant :
- un premier caisson comportant une structure interne ;
- un second caisson monté à pivotement sur ladite structure interne autour d'un axe d'articulation transversal et définissant au moins un logement latéral vertical ; et
- au moins un plateau monté mobile sur ledit second caisson ;
ladite console étant apte à passer :
- d'une configuration escamotée dans laquelle ledit second caisson s'étend dans le prolongement arrière dudit premier caisson, et où le au moins dit plateau est reçu dans un dit logement latéral correspondant ;
- à une configuration de service dans laquelle ledit second caisson a pivoté vers le haut pour s'étendre au dessus et à l'arrière dudit premier caisson, et où le au moins dit plateau s'étend à l'horizontale de sorte à former une table.

Ce type de console présente l'avantage d'être particulièrement compacte dans sa configuration escamotée tout en offrant dans sa configuration de service une excellente ergonomie d'utilisation de la table grâce à sa position surélevée.

Toutefois, en cas d'accident lorsque le véhicule est percuté par l'arrière alors que la console occupe sa configuration escamotée, il arrive que le ou les plateaux soient éjectés à coulissement vers l'arrière de leurs logements respectifs ce qui peut occasionner des blessures pour les passagers situés à proximité.

### Objet et résumé de l'invention

La présente invention vise donc à garantir le maintien du ou des plateaux à l'intérieur de leurs logements respectifs lorsque la console occupe sa configuration escamotée.

Elle propose à cet effet une console pour véhicule automobile destinée à être montée coulissante sur le plancher dudit véhicule le long de son axe longitudinal médian, comportant :
- un premier caisson comprenant une structure interne ;
- un second caisson monté à pivotement sur ladite structure interne autour d'un premier axe d'articulation transversal et définissant au moins un logement latéral vertical ; et
- au moins un plateau monté mobile sur ledit second caisson ;
ladite console étant apte à passer :
- d'une configuration escamotée dans laquelle ledit second caisson occupe une position rabattue où il s'étend dans le prolongement arrière dudit premier caisson, tandis que le au moins dit plateau occupe une position rangée où il est reçu dans un dit logement latéral vertical correspondant ;
- à une configuration de service dans laquelle ledit second caisson a pivoté vers le haut pour venir occuper une position relevée où il s'étend au dessus et à l'arrière dudit premier caisson, tandis que le au moins dit plateau s'étend à l'horizontale de sorte à former une table ;
caractérisée en ce que ledit premier caisson comporte, pour chaque dit plateau, un doigt de retenue prenant racine sur la partie supérieure de ladite structure interne en pointant vers le bas et étant agencé pour s'introduire, lors du rabattement à pivotement dudit second caisson alors que ledit plateau occupe ladite position rangée, dans un orifice respectif ménagé sur ledit plateau.

Grâce à la coopération entre ce doigt et cet orifice, le plateau est empêché de coulisser longitudinalement lorsque la console occupe sa configuration escamotée et ne peut donc être éjecté de son logement même en cas de choc violent.

Selon des caractéristiques préférées de la console, prises seules ou en combinaison :
- ledit doigt présente un profil en arc de cercle centré sur ledit axe d'articulation transversal ;
- ledit doigt présente au niveau de son extrémité libre un profil s'amincissant en pointe ;
- ledit premier caisson comporte, pour chaque dit plateau, un organe de maintien saillant d'une face latérale externe de ladite structure interne et comprenant une patte s'étendant vers l'arrière dans un plan sensiblement vertical et parallèle à cette face latérale externe, ladite patte étant apte à s'introduire, lors du rabattement à pivotement dudit second caisson alors que ledit plateau occupe ladite position rangée, dans une découpe de hauteur correspondante ménagée dans un rebord avant dudit plateau ;
- ladite patte, en forme d'ancre de marine, comprend une branche centrale rigide ainsi que deux ailettes élastiquement déformables s'étendant symétriquement de part et d'autre de ladite branche centrale depuis son extrémité libre ;
- chaque dite ailette comprend une portion proximale oblique formant rampe de guidage pour un bord respectif supérieur ou inférieur de ladite découpe et se prolongeant à l'avant par une portion distale s'étendant parallèlement à ladite branche centrale ;
- l'écartement transversal entre ladite patte et ladite face externe de la structure interne est prédéterminé de sorte que, lors du rabattement à pivotement dudit second caisson alors que ledit plateau occupe ladite position rangée, la portion de chaque dit plateau située au niveau de sa découpe vienne s'insérer en sandwich entre ladite patte et une face latérale externe de ladite structure interne ;
- l'extrémité libre de ladite patte est recourbée du côté externe de sorte à former une rampe de guidage pour un bord latéral de ladite découpe ;
- la face interne dudit plateau 241 présente une nervure par l'intermédiaire de laquelle s'effectue le contact entre ledit plateau et la face latérale externe de ladite structure interne lors du rabattement dudit second caisson ; et/ou
- ladite patte est reliée à ladite face latérale externe de ladite structure interne par un pied support transversal.

### Brève description des dessins

L'exposé de l'invention sera maintenant poursuivi par la description détaillée d'un exemple de réalisation, donnée ci-après à titre illustratif mais non limitatif, en référence aux dessins annexés, sur lesquels :
- la figure 1 représente une vue en perspective de trois quart avant de la console selon l'invention en configuration escamotée ;
- la figure 2 est une vue en perspective de trois quart avant de la console selon l'invention en configuration de service ;
- la figure 3 représente une vue en coupe transversale de la console selon le plan de coupe transversal médian du second caisson et sur laquelle l'un des deux plateaux est rentré dans son logement tandis que le second est relevé au maximum à la verticale ;
- la figure 4 est une vue en perspective de trois quart avant de la console selon l'invention juste avant son retour en configuration escamotée et sur laquelle seules les structures internes des caissons et les plateaux sont montrés pour une meilleure visibilité ;
- la figure 5 représente une vue en coupe longitudinale verticale de la console en configuration escamotée, prise selon le plan médian des organes de maintien ;
- la figure 6 est un agrandissement de la zone VI de la figure 5 ;
- la figure 7 représente une vue en perspective de la zone montrée sur la figure 6 ;
- la figure 8 est un agrandissement de la zone VIII de la figure 5 ;
- la figure 9 représente une vue en perspective de la zone montrée sur la figure 8 ;
- la figure 10 est une vue en coupe de la zone montrée sur la figure 9 prise selon le plan X-X de la figure 5 ; et
- la figure 11 représente une vue en perspective di coin inférieur avant d'un plateau.

### Description détaillée d'un mode de réalisation préféré

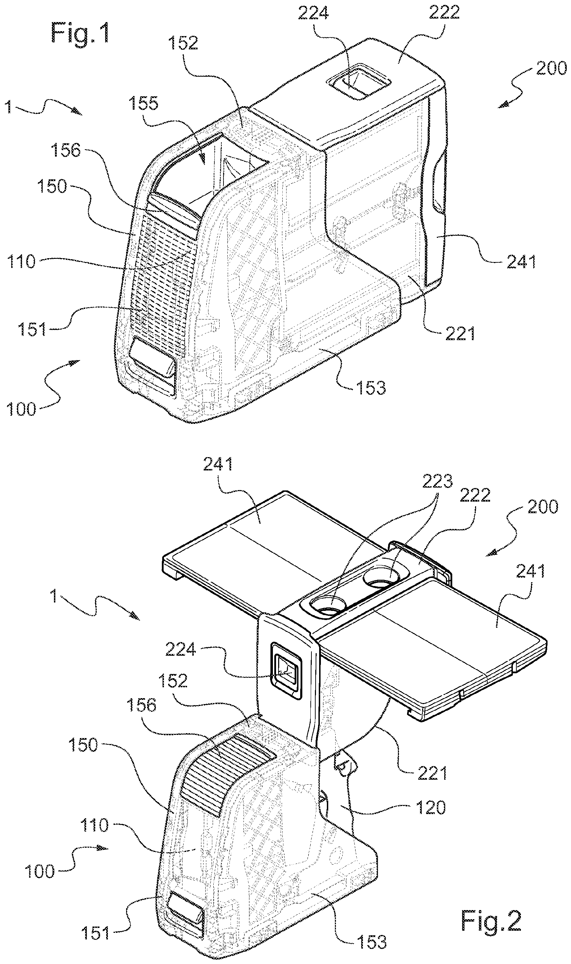

La console 1 représentée sur les figures 1 à 4 est destinée à être montée coulissante sur le plancher d'un véhicule automobile de type monospace ou utilitaire le long de l'axe longitudinal médian de ce véhicule entre les deux sièges de chacune des différentes rangées de sièges.

Par convention, les termes « avant », « arrière », « longitudinal » et « transversal » sont définis par rapport à la position de montage conventionnelle de cette console 1 dans l'habitacle du véhicule.

La console 1 est constituée d'un caisson support de rangement 100 ainsi que d'un caisson table 200 articulé sur ce caisson support de rangement.

Le caisson support de rangement 100 comporte une structure interne 110 recouverte d'une enveloppe 150.

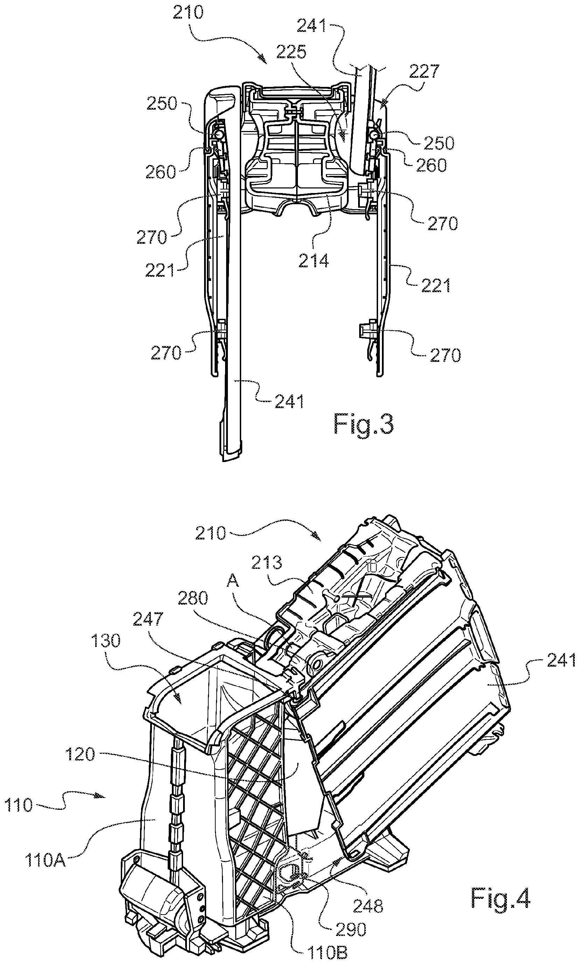

La structure interne 110 mieux visible sur la figure 3 est constituée par deux coques symétriques 110A, 110B obtenues séparément par moulage à partir d'un polymère thermoplastique puis assemblées l'une à l'autre par une pluralité de vis de fixation.

Le polymère utilisé est de préférence un polyamide avantageusement chargé en fibres de verre tel que le PA6 GF50.

Cette structure interne 110 comporte en partie inférieure un rail longitudinal mâle de guidage 113 prévu pour être monté mobile à coulissement à l'intérieur et le long d'un rail femelle fixe implanté dans le plancher le long de l'axe longitudinal médian du véhicule.

La structure interne 110 comprend également une jambe support creuse 120 s'étendant sensiblement verticalement au dessus de la partie arrière du rail 113 et dont l'extrémité supérieure porte un axe d'articulation transversal A et autour duquel est articulé à pivotement le caisson table 200.

Comme illustré par la figure 1, la structure interne 110 comporte en outre, à l'avant de la jambe 120 et au dessus du rail 113, un bac 130 ouvert sur le dessus et définissant une cavité de rangement.

L'enveloppe 150 ouverte sur l'arrière est délimitée par une façade avant 151, une paroi supérieure 152 et deux flasques latéraux 153.

La paroi supérieure 152 présente une fenêtre rectangulaire 155 située à l'aplomb du bac de rangement 130 et par laquelle les utilisateurs ont accès à ce bac 130.

L'enveloppe 150 comprend en outre un rideau de couverture à lamelles 156 monté coulissant le long et en dessous de la façade avant 151 et de la paroi supérieure 152 entre une position d'ouverture dans laquelle il est dissimulé derrière la façade avant 151 et où la fenêtre d'accès 155 est ouverte (figure 1), et une position de fermeture dans laquelle il couvre cette fenêtre d'accès 155 (figure 2).

Le caisson table 200 comporte une structure interne en L 210 dont les faces latérales sont couvertes par deux flasques latéraux 221 présentant des profils échancrés en arc de cercle complémentaires de ceux des deux flasques latéraux 153 de l'enveloppe 150 du caisson support de rangement 100.

Cette structure interne 210 comprend une première branche 213 articulée à pivotement sur la jambe 120 de la structure interne 110, ainsi qu'une seconde branche 214 lui étant perpendiculaire (figure 3).

Les tranches extérieures de la structure 210 sont en outre recouverte d'un habillage 222 dont la portion couvrant la seconde branche 214 présente des évidements cylindriques 223 constituants des porte-gobelets aptes à recevoir par exemple les canettes ou les bouteilles logées dans le bac de rangement 130 (figure 2).

Le caisson table 200 comporte en outre une poignée de déverrouillage 224 montée sur la première branche 213 de la structure interne 210 et accessible depuis l'extérieur de ce caisson 200 grâce à une découpe ménagée dans l'habillage 222.

Cette poignée 224, reliée à un mécanisme interne (non détaillé ici et ne faisant pas l'objet de la présente invention), permet à l'usager de faire pivoter ce caisson table 200 entre une position rabattue dans laquelle il s'étend dans le prolongement arrière du caisson de rangement support 100 (figure 1), et une position relevée à 90° dans laquelle il s'étend au dessus à l'arrière de ce même caisson support de rangement 100 (figure 2).

Dans la position rabattue du caisson table 200, les première et seconde branches 214 de la structure interne en L 210 s'étendent respectivement horizontalement et verticalement ; tandis que les flasques latéraux 221 et ceux complémentaires 153 du caisson support de rangement 100 forment, deux à deux, deux flasques latéraux continus sensiblement rectangulaires (figure 1).

Dans la position relevée de ce caisson table 200, la première branche 213 de la structure interne en L 210 prolonge verticalement la jambe support 120 pour former avec elle un montant support, tandis que la seconde branche 214 s'étend horizontalement vers l'arrière et donc à l'opposé du bac de rangement 130.

Entre la structure interne en L 210 et les deux flasques latéraux 221, le caisson table 200 définit deux logements latéraux verticaux 225 opposés transversalement et aptes chacun à recevoir via une fente d'entrée respective 227 un plateau rectangulaire correspondant 241 (figure 2).

Chaque plateau 241 comprend un panneau rectangulaire métallique 242 (de préférence en aluminium pour limiter la masse) bordée par trois rebords externes avant 243, supérieur 244 et inférieur 245.

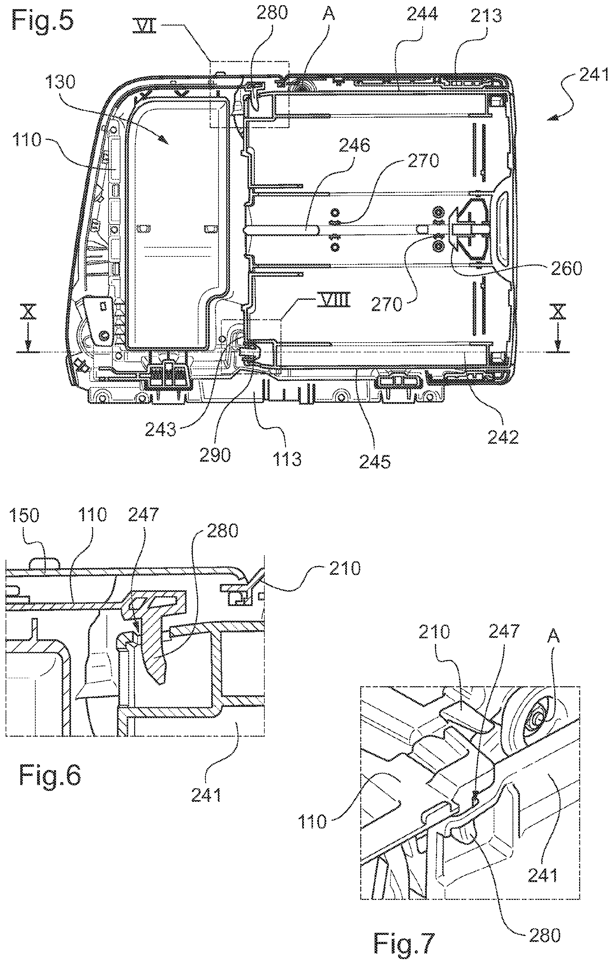

Afin d'éviter toute ambigüité, on notera que les termes « avant », « arrière », « supérieur » et « inférieur » associés aux éléments constitutifs des panneaux 241 sont à considérer par rapport au positionnement de ces derniers lorsque la console 1 occupe sa configuration escamotée tel que représenté sur la figure 5.

Chacun des plateaux 241 est en outre monté mobile sur le caisson table 200 par des moyens de guidage à coulissement et à pivotement entre une position rangée dans laquelle il est reçu dans le logement correspondant 225 en s'étendant globalement dans un plan longitudinal vertical (figures 1, 3 et 5), et une position déployée dans laquelle il s'étend quasiment entièrement hors de son logement 225 dans un plan sensiblement horizontal et parallèle à la seconde branche 214 de la structure interne en L 210 pour former une moitié de table (figure 2).

Les moyens de guidage à coulissement et à pivotement comportent, pour chaque plateau 241, une poutre cylindrique métallique 250 solidaire de la structure interne 210 du caisson table 200 et s'étendant le long de la fente d'entrée 227 du logement correspondant 225, ainsi qu'une platine de guidage 260 montée à rotation en partie centrale de la poutre 250 (figure 3).

La platine 260 est en outre montée solidaire à coulissement le long d'un profilé 246 s'étendant le long de la face externe du panneau 242 au niveau de son plan médian (figures 4 et 5).

Les moyens de guidage à coulissement et à pivotement comportent également, pour chaque plateau 241, deux organes de guidage complémentaires 270 ménagés le long de la face interne du flasque latéral correspondant 221 et aptes à être traversés successivement à coulissement par le profilé 246 du plateau 241 lors de son rangement dans le logement 225 (figures 3 et 5).

La console 1 est donc apte à passer d'une configuration escamotée dans laquelle le caisson table 200 occupe sa position rabattue tandis que les plateaux 241 sont en position rangée (figure 1), à une configuration de service dans laquelle ce caisson table 200 occupe sa position relevée tandis que les plateaux 241 s'étendent à l'horizontale en position déployée de part et d'autre du caisson 200 de sorte à former une table (figure 2).

Pour faire passer la console 1 de sa configuration escamotée à celle de service, l'usager commencera par faire pivoter le caisson table 200 en position relevée puis extraira verticalement à coulissement les plateaux 241 de leurs logements respectifs 225 avant de les faire pivoter à l'horizontale pour les amener en position déployée.

On comprend que le retour en configuration escamotée s'effectuera en réalisant la manipulation inverse.

La console 1 comporte également deux doigts de retenue 280 prenant racine au sommet de la structure interne 110 du caisson 100 à proximité de l'axe d'articulation transversal A et à l'opposé transversalement l'un de l'autre, chacun d'eux pointant vers le bas suivant un profil en arc de cercle centré sur cet axe A (figures 4 à 7).

Ces deux doigts 280 sont avantageusement venus de moulage d'une seule pièce avec une coque correspondante 110A, 110B de la structure interne 110.

Chaque doigt 280 est apte à s'introduire, lors du rabattement à pivotement du caisson table 200 alors que les plateaux 241 occupent leur position rangée, dans un orifice respectif légèrement oblong 247 ménagé sur le rebord externe supérieur 244 d'un plateau correspondant 241 à proximité de son coin avant supérieur le plus proche de l'axe d'articulation A (figure 4).

Ainsi, lorsque ce caisson table 200 retrouve sa configuration rabattue et que la console 1 occupe de nouveau sa configuration escamotée, les plateaux 241 sont empêchés de coulisser longitudinalement vers l'arrière hors des logements 225 grâce à la venue en butée de ces deux doigts 280 contre le bord des orifices 247 (figures 6 et 7).

Afin de faciliter leur insertion au travers des orifices 282, les deux doigts 280 présentent avantageusement au niveau de leur extrémité libre respective un profil s'amincissant en pointe.

La console 1 comporte en outre deux organes de maintien 290 prenant racine en partie inférieure de la structure interne 110 du caisson 100 à l'opposé transversalement l'un de l'autre et à la verticale des doigts 280 (figures 4 à 7).

Ces deux organes de maintien 290 sont avantageusement venus de moulage d'une seule pièce avec une coque correspondante 110A, 110B de la structure interne 110.

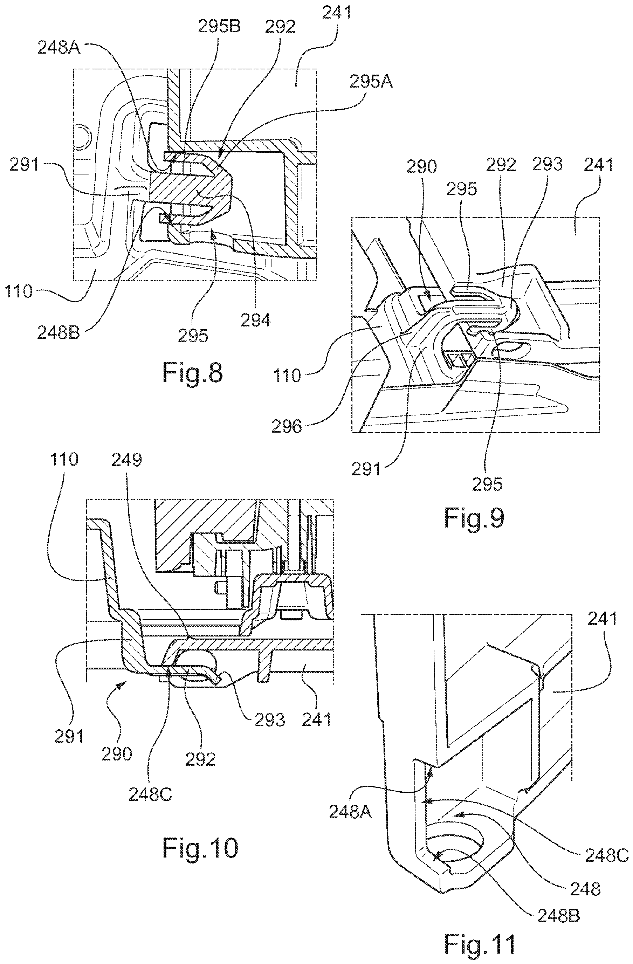

Tel qu'illustré par la figure 9, chacun des organes 290 comprend un pied 291 s'étendant transversalement depuis une face latérale externe respective de la structure interne 110 et se prolongeant par une patte 292 en forme d'ancre de marine s'étendant vers l'arrière dans un plan sensiblement vertical et parallèle à cette face latérale externe jusqu'à une extrémité libre arrondie 293 légèrement recourbée du côté externe.

Chaque patte 292 comprend une branche centrale rigide 294 raccordée au pied 291 ainsi que de deux ailettes élastiquement déformables 295 s'étendant symétriquement de part et d'autre de cette branche centrale 294 depuis cette extrémité libre recourbée 293.

Les ailettes 295 sont chacune constituées par une portion proximale oblique 295A se prolongeant à l'avant par une portion distale 295B s'étendant parallèlement à la branche centrale 294.

Avantageusement, et afin d'améliorer leur tenue mécanique, les pattes 290 sont pourvues au niveau de leur pied d'au moins une nervure de renfort 296 (figure 9).

Chaque patte 292 est apte à coopérer avec une découpe rectangulaire 248 de hauteur correspondante ménagée sur le rebord externe avant 243 du plateau 241 à proximité de son coin inférieur avant (figures 8 à 11).

Lors du rabattement à pivotement du caisson table 200 alors que les plateaux 241 occupent leur position rangée, chaque patte 292 s'introduit progressivement dans une découpe 248 correspondante.

Afin d'éviter tout risque de blocage des plateaux 241, les portions proximales obliques 295A des ailettes 295 forment des rampes de guidage respectivement pour un bord respectif supérieur 248A ou inférieur 248B d'une découpe 248 (figure 8), tandis que l'extrémité libre recourbée 293 constitue une telle rampe de guidage pour son bord latéral 248C (figure 10).

Lorsque le caisson table 200 retrouve sa position rabattue et que la console 1 occupe de nouveau sa configuration escamotée, les portions distales 295B des ailettes 295 sont respectivement au contact des bords supérieurs 248A et inférieurs 248B des découpes 248 (figures 8 et 9).

Les extrémités avant des plateaux 241 sont ainsi empêchées par les pattes 292 de se mouvoir verticalement lorsque la console 1 est soumise à des vibrations pendant le roulage du véhicule.

Par ailleurs, l'écartement transversal entre chaque patte 292 et la face externe correspondante de la structure interne 110 est prédéterminé de sorte que, lors du rabattement à pivotement du caisson table 200 alors que les plateaux 241 occupent leur position rangée, la portion de chaque plateau 241 située au niveau de sa découpe 248 vienne s'insérer en sandwich entre une patte 292 et une face latérale externe correspondante de la structure interne 110 (figure 10).

Lorsque le caisson table 200 retrouve sa position rabattue et que la console 1 occupe de nouveau sa configuration escamotée, chaque bord interne 248C d'une découpe 248 repose contre une patte 292 tandis que la face interne de chaque plateau 241 repose sur une face latérale externe de la structure interne 110.

Les extrémités avant des plateaux 241 sont ainsi empêchées par les pattes 292 de se mouvoir transversalement lorsque la console 1 est soumise à des vibrations pendant le roulage du véhicule.

On notera qu'afin de limiter les frottements, la face interne de chaque plateau 241 présente une nervure 249 par l'intermédiaire de laquelle s'effectue le contact entre celui-ci et la face latérale externe de la structure interne 110 lors du rabattement du caisson table 200.

Bien entendu, la présente invention ne se limite pas aux formes de réalisation décrites et représentées, mais englobe également toutes les variantes d'exécution à la portée de l'homme du métier.

La console pourrait par exemple ne comporter qu'un seul plateau associé à un logement unique et formant la table lorsqu'il occupe sa position déployée.

## Revendications

1. Console pour véhicule automobile destinée à être montée coulissante sur le plancher dudit véhicule le long de son axe longitudinal médian, comportant :
- un premier caisson (100) comprenant une structure interne (110) ;
- un second caisson (200) monté à pivotement sur ladite structure interne (110) autour d'un premier axe d'articulation transversal (A) et définissant au moins un logement latéral vertical (217, 218) ; et
- au moins un plateau (221, 222) monté mobile sur ledit second caisson (200) ;
ladite console étant apte à passer :
- d'une configuration escamotée dans laquelle ledit second caisson (200) occupe une position rabattue où il s'étend dans le prolongement arrière dudit premier caisson (100), tandis que le au moins dit plateau (221, 222) occupe une position rangée où il est reçu dans un dit logement latéral vertical correspondant (217, 218) ;
- à une configuration de service dans laquelle ledit second caisson (200) a pivoté vers le haut pour venir occuper une position relevée où il s'étend au dessus et à l'arrière dudit premier caisson (100), tandis que le au moins dit plateau (221, 222) s'étend à l'horizontale de sorte à former une table ;
**caractérisée en ce que** ledit premier caisson (100) comporte, pour chaque dit plateau (241), un doigt de retenue (280) prenant racine sur la partie supérieure de ladite structure interne (110) en pointant vers le bas et étant agencé pour s'introduire, lors du rabattement à pivotement dudit second caisson (200) alors que ledit plateau (241) occupe ladite position rangée, dans un orifice respectif (247) ménagé sur ledit plateau (241).

2. Console pour véhicule automobile selon la revendication 1, **caractérisée en ce que** ledit doigt (280) présente un profil en arc de cercle centré sur ledit axe d'articulation transversal (A).

3. Console pour véhicule automobile selon l'une des revendications précédentes, **caractérisée en ce que** ledit doigt (280) présente au niveau de son extrémité libre un profil s'amincissant en pointe.

4. Console pour véhicule automobile selon l'une des revendications précédentes, **caractérisée en ce que** ledit premier caisson (100) comporte, pour chaque dit plateau (241), un organe de maintien (290) saillant d'une face latérale externe de ladite structure interne (110) et comprenant une patte (292) s'étendant vers l'arrière dans un plan sensiblement vertical et parallèle à cette face latérale externe, ladite patte (292) étant apte à s'introduire, lors du rabattement à pivotement dudit second caisson (200) alors que ledit plateau (241) occupe ladite position rangée, dans une découpe (248) de hauteur correspondante ménagée dans un rebord avant (243) dudit plateau (241).

5. Console pour véhicule automobile selon la revendication 4, **caractérisée en ce que** ladite patte (292), en forme d'ancre de marine, comprend une branche centrale rigide (294) ainsi que deux ailettes élastiquement déformables (295) s'étendant symétriquement de part et d'autre de ladite branche centrale (294) depuis son extrémité libre.

6. Console pour véhicule automobile selon la revendication 5, **caractérisée en ce que** chaque dite ailette (295) comprend une portion proximale oblique (295A) formant rampe de guidage pour un bord respectif supérieur (248A) ou inférieur (248B) de ladite découpe (248) et se prolongeant à l'avant par une portion distale (295B) s'étendant parallèlement à ladite branche centrale (294).

7. Console pour véhicule automobile selon l'une des revendications 4 à 6, **caractérisée en ce que** l'écartement transversal entre ladite patte (292) et ladite face externe de la structure interne (110) est prédéterminé de sorte que, lors du rabattement à pivotement dudit second caisson (200) alors que ledit plateau (241) occupe ladite position rangée, la portion de chaque dit plateau (241) située au niveau de sa découpe (248) vienne s'insérer en sandwich entre ladite patte (292) et une face latérale externe de ladite structure interne (110).

8. Console pour véhicule automobile selon la revendication 7, **caractérisée en ce que** l'extrémité libre de ladite patte (292) est recourbée du côté externe de sorte à former une rampe de guidage pour un bord latéral (248C) de ladite découpe (248).

9. Console pour véhicule automobile selon l'une des revendications 7 ou 8, **caractérisée en ce que** la face interne dudit plateau (241) présente une nervure (249) par l'intermédiaire de laquelle s'effectue le contact entre ledit plateau (241) et la face latérale externe de ladite structure interne (110) lors du rabattement dudit second caisson (200).

10. Console pour véhicule automobile selon l'une des revendications 4 à 9, **caractérisée en ce que** ladite patte (292) est reliée à ladite face latérale externe de ladite structure interne (110) par un pied support transversal (291).

## Patentansprüche

1. Konsole für ein Kraftfahrzeug, die dazu bestimmt ist, auf dem Boden des Fahrzeugs entlang seiner Längsmittelachse verschiebbar montiert zu werden, mit :
- einen ersten Kasten (100) mit einer inneren Struktur (110);
- einen zweiten Kasten (200), der schwenkbar an der inneren Struktur (110) um eine erste quer verlaufende Scharnierachse (A) montiert ist und mindestens ein vertikales seitliches Gehäuse (217, 218) definiert; undeinen zweiten Kasten (200), der Folgendes umfasst: einen ersten Kasten (100), der eine innere Struktur (110) umfasst; und einen zweiten Kasten (200), der einen zweiten Kasten (200) umfasst, der schwenkbar an der inneren Struktur (110) um eine zweite quer verlaufende Scharnierachse (A) montiert ist und mindestens ein vertikales seitliches Gehäuse (217, 218) definiert; **dadurch gekennzeichnet, dass** der zweite Kasten (200) an der inneren Struktur (110) montiert ist und schwenkbar an der inneren Struktur (110) um eine zweite quer verlaufende Scharnierachse (A) montiert ist.
- mindestens eine Platte (221, 222), die beweglich auf dem genannten zweiten Kasten (200) montiert ist;
wobei die Konsole in der Lage ist, :
- aus einer eingezogenen Konfiguration, in der der zweite Kasten (200) eine gefaltete Position einnimmt, in der er sich in die hintere Verlängerung des ersten Kastens (100) erstreckt, während die mindestens eine Ablage (221, 222) eine Stauposition einnimmt, in der sie in einer entsprechenden vertikalen seitlichen Aufnahme (217, 218) aufgenommen ist;
- zu einer Servicekonfiguration, in der der zweite Kasten (200) nach oben in eine angehobene Position geschwenkt worden ist, die sich über und zur Rückseite des ersten Kastens (100) erstreckt, während sich das mindestens eine Tablett (221, 222) horizontal erstreckt, um einen Tisch zu bilden;
**dadurch gekennzeichnet, dass** der erste Kasten (100) für jedes Tablett (241) einen Haltefinger (280) umfasst, der sich am oberen Teil der inneren Struktur (110) verankert, nach unten zeigt und so angeordnet ist, dass er, wenn der zweite Kasten (200) nach unten geschwenkt wird, während sich das Tablett (241) in der Verstaustellung befindet, in eine entsprechende Öffnung (247) eingeführt wird, die auf dem Tablett (241) ausgebildet ist.

2. Kraftfahrzeugkonsole nach Anspruch 1, **dadurch gekennzeichnet, dass** der Finger (280) ein kreisbogenförmiges Profil aufweist, das auf die querverlaufende Gelenkachse (A) zentriert ist.

3. Konsole für ein Kraftfahrzeug nach einem der vorstehenden Ansprüche, **dadurch gekennzeichnet, dass** der Finger (280) an seinem freien Ende ein spitz zulaufendes Profil aufweist.

4. Konsole für ein Kraftfahrzeug nach einem der vorstehenden Ansprüche, **dadurch gekennzeichnet, dass** der erste Kasten (100) für jede der Platten (241) ein Halteelement (290) umfasst, das von einer äußeren Seitenfläche der Innenstruktur (110) vorsteht und eine Lasche (292) aufweist, die sich nach hinten in einer im Wesentlichen vertikalen Ebene parallel zu dieser äußeren Seitenfläche erstreckt, wobei die Lasche (292), wenn die zweite Schachtel (200) schwenkbar nach unten geklappt wird, während sich die Schale (241) in der Verstaustellung befindet, in einen Ausschnitt (248) entsprechender Höhe eingeführt werden kann, der in einer Vorderkante (243) der Schale (241) vorgesehen ist.

5. Kraftfahrzeugkonsole nach Anspruch 4, **dadurch gekennzeichnet, dass** die Konsole (292) in Form eines Schiffsankers einen starren Mittelarm (294) sowie zwei elastisch verformbare Flossen (295) umfasst, die sich symmetrisch auf beiden Seiten des Mittelarms (294) von dessen freiem Ende aus erstrecken.

6. Kraftfahrzeugkonsole nach Anspruch 5, **dadurch gekennzeichnet, dass** jede Rippe (295) einen schrägen proximalen Abschnitt (295A) aufweist, der eine Führungsrampe für eine obere (248A) bzw. untere (248B) Kante des Ausschnitts (248) bildet und vorne durch einen distalen Abschnitt (295B) verlängert ist, der sich parallel zu dem zentralen Zweig (294) erstreckt.

7. Konsole für ein Kraftfahrzeug nach einem der Ansprüche 4 bis 6, **dadurch gekennzeichnet, daß** der Querabstand zwischen der genannten Lasche (292) und der genannten Außenseite der Innenstruktur (110) so vorbestimmt ist, daß, wenn der zweite Kasten (200) nach unten geschwenkt wird, während sich die genannte Schale (241) in der genannten Verstaustellung befindet, der Teil jeder genannten Schale (241), der sich in Höhe ihres Ausschnitts (248) befindet, in ein Sandwich zwischen der genannten Lasche (292) und einer äußeren Seitenfläche der genannten Innenstruktur (110) eingefügt wird.

8. Kraftfahrzeugkonsole nach Anspruch 7, **dadurch gekennzeichnet, dass** das freie Ende der Lasche (292) an der Außenseite so gebogen ist, dass es eine Führungsrampe für eine Seitenkante (248C) des Ausschnitts (248) bildet.

9. Kraftfahrzeugkonsole nach einem der Ansprüche 7 oder 8, **dadurch gekennzeichnet, dass** die Innenseite der Platte (241) eine Rippe (249) aufweist, durch die beim Umklappen des zweiten Kastens (200) ein Kontakt zwischen der Platte (241) und der äußeren Seitenfläche der Innenstruktur (110) hergestellt wird.

10. Konsole für ein Kraftfahrzeug nach einem der Ansprüche 4 bis 9, **dadurch gekennzeichnet, dass** die Konsole (292) mit der äußeren Seitenfläche der Innenstruktur (110) durch einen Querstützfuß (291) verbunden ist.

## Claims

1. Console for a motor vehicle intended to be mounted slidingly on the floor of the said vehicle along its longitudinal median axis, comprising :
- a first box (100) comprising an internal structure (110);
- a second box (200) pivotally mounted on said internal structure (110) about a first transverse articulation axis (A) and defining at least one vertical lateral housing (217, 218); and a second box (200) pivotally mounted on said internal structure (110) about a second transverse articulation axis (B) and defining at least one vertical lateral housing (217, 218).
- at least one tray (221, 222) movably mounted on said second box (200);
said console being able to pass :
- a retracted configuration in which said second box (200) occupies a folded position in which it extends in the rear extension of said first box (100), while said at least one tray (221, 222) occupies a stowed position in which it is received in a corresponding said vertical lateral housing (217, 218);
- to a service configuration in which said second carcase (200) has been pivoted upwardly into a raised position extending above and behind said first carcase (100), while said at least one top (221, 222) extends horizontally so as to form a table;
**characterised in that** said first box (100) comprises, for each said tray (241), a retaining finger (280) taking root on the upper part of said internal structure (110) pointing downwards and being arranged to be introduced, when said second box (200) is pivoted down while said tray (241) is in said stowed position, into a respective orifice (247) provided on said tray (241).

2. Motor vehicle console according to claim 1, **characterised in that** said finger (280) has a circular arc profile centred on said transverse articulation axis (A).

3. A console for a motor vehicle according to one of the preceding claims, **characterised in that** said finger (280) has at its free end a profile tapering in point.

4. Console for a motor vehicle according to one of the preceding claims, **characterised in that** the said first box (100) comprises, for each said plate (241), a holding member (290) projecting from an external lateral face of the said internal structure (110) and comprising a lug (292) extending rearwards in a substantially vertical plane parallel to this external lateral face, said tab (292) being able to be inserted, when said second box (200) is pivoted down while said tray (241) is in said stowed position, into a cutout (248) of corresponding height provided in a front edge (243) of said tray (241).

5. Motor vehicle console according to claim 4, **characterised in that** said bracket (292), in the form of a marine anchor, comprises a rigid central branch (294) as well as two elastically deformable fins (295) extending symmetrically on either side of said central branch (294) from its free end.

6. Motor vehicle console according to claim 5, **characterised in that** each said wing (295) comprises an oblique proximal portion (295A) forming a guide ramp for a respective upper (248A) or lower (248B) edge of said cut-out (248) and being extended at the front by a distal portion (295B) extending parallel to said central branch (294).

7. Motor vehicle console according to one of claims 4 to 6, **characterised in that** the transverse spacing between said lug (292) and said outer face of the internal structure (110) is predetermined so that, when said second box (200) is pivoted down while said tray (241) is in said stowed position, the portion of each said tray (241) located at the level of its cut-out (248) is sandwiched between said lug (292) and an outer lateral face of said internal structure (110).

8. Motor vehicle console according to claim 7, **characterised in that** the free end of said tab (292) is curved on the external side so as to form a guide ramp for a lateral edge (248C) of said cut-out (248).

9. Motor vehicle console according to one of claims 7 or 8, **characterised in that** the inner face of said plate (241) has a rib (249) by means of which contact is made between said plate (241) and the outer lateral face of said inner structure (110) when said second box (200) is folded down.

10. Console for a motor vehicle in accordance with one of claims 4 to 9, **characterised in that** the said tab (292) is connected to the said outer lateral face of the said internal structure (110) by a transverse support foot (291).
